# EUROPÄISCHE PATENTANMELDUNG

(11) **EP 1 118 789 A2**
(43) Veröffentlichungstag der Anmeldung: **25.07.2001**
(21) Anmeldenummer: 01100565.9
(22) Anmeldetag: 10.01.2001
(51) Int. Cl.: F16D 55/22, F16D 65/12

(54) **Bremsscheiben-/Felgenaggregat für Räder von insbesondere Kraftfahrzeugen**

(30) Priorität: 18.01.2000 DE 10001806
(71) Anmelder: Continental Teves AG & Co. oHG, 60488 Frankfurt (DE)
(72) Erfinder: Ungethüm, Ulrich, 63179 Obertshausen (DE)

(57) **Zusammenfassung**

Es handelt sich um ein Bremsscheiben-/Felgenaggregat für Räder von insbesondere Kraftfahrzeugen. Dieses weist in seinem grundsätzlichen Aufbau eine Felge (1) und zumindest einen Reibring (4) auf. Erfindungsgemäß ist der Reibring (4) unmittelbar an die Felge (1) anschließbar, um eine konstruktiv einfache und leichte Ausgestaltung zu erreichen.

## Beschreibung

Die Erfindung betrifft ein Bremsscheiben-/Felgenaggregat für Räder von insbesondere Kraftfahrzeugen, mit einer Felge, und mit zumindest einem Reibring.

Eine derartige Felge, die üblicherweise aus Stahl oder Leichtmetall gefertigt ist, besteht in ihrem grundsätzlichen Aufbau im wesentlichen aus einem Felgenbett mit Felgenschulter nebst Felgenhorn sowie aus einer innenseitigen Felgenschüssel bzw. einem Felgenfuß. Ein derartiger Aufbau ist im Rahmen der Erfindung natürlich nicht zwingend, wenn gleich bevorzugt.

Dabei kann der Felgenfuß bzw. die Felgenschüssel u.a. einen Bremsscheibenträger aufnehmen, welcher seinerseits den Reibring bzw. die Bremsscheibe trägt.

Bei einem bekannten Bremsscheiben-/Felgenaggregat weist hierzu ein radial außenliegender Abschnitt des Bremsscheibenträgers Bohrungen auf, durch welche Radschrauben geführt sind. Diese Radschrauben dienen sowohl zur Befestigung der Felge bzw. Radfelge als auch zur Befestigung eines zylindrischen Verbindungsteils, mit welchem die Bremsscheibe bzw. der Reibring einstückig verbunden ist. - Die vorliegende Ausgestaltung hat sich grundsätzlich bewährt, ist jedoch im Hinblick auf die konstruktive Realisierung aufwendig. Denn es sind eine Vielzahl von Befestigungselementen vonnöten, die für die Anbindung der Bremsscheibe bzw. des Reibringes sorgen. Im übrigen kann nicht mit letzter Sicherheit gewährleistet werden, daß auftretende thermische Belastungen spannungsfrei aufgenommen werden (vergleiche DE-34 46 437 C 2).

Daneben kennt man Bremsscheiben in konventioneller Bauart, welche aus einem Reibring und einem Halteteil zusammengesetzt sind. Zu diesem Zweck ist der Reibring in seinem inneren Bereich mit Ausnehmungen versehen, welche mit über den Umfang des Halteteils verteilen Zähnen eine drehfeste Verbindung eingehen (vergleiche DE 4419 754 A1).

Schließlich ist im Stand der Technik eine ähnliche Bremsscheibe vorgeschlagen worden, deren Reibring lösbar am Halteteil befestigt ist. Diese Befestigung soll zugleich spielfrei gestaltet sein und darüber hinaus Relativbewegungen zwischen Reibring und Halteteil zulassen, um thermischen oder mechanischen Belastungen Rechnung zu tragen. Zu diesem Zweck wird der Reibring mittels zumindest eines federnden Verbindungselementes, welches unter Federvorspannung am Halteteil und am Reibring anliegt, spielfrei am Halteteil befestigt. Die bekannte zusammengesetzte Bremsscheibe wird in bekannter Weise mit einer Nabe eines Rades bzw. Fahrzeugrades verbunden. Insofern wird auch hier eine konstruktive relativ aufwendige Ausgestaltung verfolgt (vergleiche DE 197 26 674 A1).

Der Erfindung liegt das technische Problem zugrunde, ein Bremsscheiben-/Felgenaggregat der eingangs beschriebenen Gestaltung zu schaffen, welches mit minimalem konstruktiven Aufwand zugleich thermische und mechanische Belastungen problemlos beherrscht. Außerdem wird eine Gewichtsreduzierung angestrebt.

Zur Lösung dieser Aufgabe schlägt die Erfindung bei einem gattungsgemäßen Bremsscheiben-/Felgenaggregat für Räder von insbesondere Kraftfahrzeugen vor, daß der Reibring unmittelbar - d.h. ohne Zwischenschaltung beispielsweise eines Bremsscheibenträgers (vergleiche DE 34 46 437 C2) - an die Felge anschließbar ist.

Dabei kann dieser Anschluß gleichsam irreversibel, d. h. unlösbar, erfolgen, und zwar indem der Reibring drehfest auf Zähne der Felgen bzw. eines sonstigen Halteteiles axial aufgesteckt wird, wobei diese Zähne nachfolgend radial umgebördelt werden, wie dies grundsätzlich in der Deutschen Offenlegungsschrift 44 19 754 beschrieben ist. Daraus resultiert jedoch eine spielfreie, steife Anbindung des Reibringes an das jeweilige Halteteil, die bei einem thermischen Reibringverzug möglicherweise zu Spannungsrissen führen kann.

In der Regel wird daher so vorgegangen, daß der Reibring lösbar mit der Felge verbunden ist, um beispielsweise einen problemlosen Reparaturaustausch ermöglichen zu können. Mechanische und thermische Belastungen werden besonders vorteilhaft dann aufgenommen, wenn der Reibring in Axial- und/oder Radialrichtung schwimmend an der Felge gelagert ist. Eine solch schwimmende Lagerung schützt den Reibring zusätzlich vor unerwünschten Deformationen aufgrund der Felgen- bzw. Radlagerverformung. Auch lassen sich hierdurch Abnutzungserscheinungen problemlos beherrschen, die sich u.a. als Bremsenrubbeln äußern. Jedenfalls wird durch die gleichsam schwimmende Anbindung des Reibringes an die Felge eine zuverlässige Entkoppelung zwischen diesen beiden Elementen des Bremsscheiben/Felgenaggregates erreicht, ohne daß die Übertragung aufgebrachter Bremsmomente von einer Bremszange auf den Reibring, die Felge, und schließlich das Rad und damit die Straße in irgendeiner Weise beeinträchtigt wird.

Ferner führt der Verzicht auf beispielsweise einen speziellen Bremsscheibenträger zu einer deutlichen Gewichtsreduzierung. Auch ein Haltetopf, wie er konventionell Verwendung findet, wird nicht benötigt. Aufgrund der Tatsache, daß der Reibring üblicherweise an die Felgenschüssel bzw. den Felgenfuß angeschlossen ist, steht genügend radialer und axialer Bauraum zu Verfügung, so daß sowohl eine Anbindung über den Innendurchmesser als auch den Außendurchmesser des Reibringes gelingt. Außerdem können auf diese Weise Reibringe realisiert werden, welche Durchmesser aufweisen, die praktisch nur vom Durchmesser des Felgenbettes begrenzt werden. Hierdurch lassen sich außerordentlich große Bremsmomente übertragen. Im übrigen kann durch diese Variationsmöglichkeiten die Anbringung einer Bremszange flexibel gestaltet werden, weil diese sowohl den Reibring von außen als auch von innen übergreifend ausgestaltet sein kann. Die Radmontage und -demontage wird insofern nicht behindert als der Reibring lösbar mit der Felge verbunden ist und bei der beschriebenen Vorgehensweise zuvor von der Felge entfernt werden kann. Selbstverständlich kann der Reibring auch an der Felge belassen werden, wenn dies vom Gewicht und der Handhabung her zu vertreten ist.

Weitere vorteilhafte Ausgestaltungen werden im folgenden beschrieben. So ist im Detail vorgesehen, daß die Felge an den Innen- und / oder Außendurchmesser des Reibringes angepaßte Radialstege in Umfangsrichtung aufweist, welche mit Axialauslegern den hierauf gelagerten Reibring aufnehmen. Dabei wird im allgemeinen so vorgegangen, daß der Reibring auf diese Axialausleger in Axialrichtung aufgeschoben wird, und zwar bis zu einem vom jeweiligen Axialausleger vorkragenden rückwärtigen Anschlag. Neben diesem rückwärtigen Anschlag weist in der Regel jeder Axialausleger auch einen frontseitigen Anschlag auf, zwischen denen der Reibring eingeklemmt ist.

Die jeweils frontseitigen Anschläge können an einen gemeinsamen Sicherungsring angeschlossen sein, welcher in eine von den Axialauslegern gebildete Ringnut eingreift. Dieser Sicherungsring läßt sich folglich nach axialem Aufschieben des Reibringes auf die Axialausleger an diesen festlegen und sorgt für die beschriebene axiale Halterung des Reibringes. Diese ist infolge der Anbringung der frontseitigen Anschläge an dem Sicherungsring zudem schwimmend gestaltet.

Die radial schwimmende Lagerung wird im Detail so bewerkstelligt, daß die Axialausleger in Frontansicht der Felge jeweils beidseitig von Reibringfortsätzen zur drehfesten Verbindung des Reibringes mit der Felge übergriffen werden. Mit anderen Worten greifen die Axialausleger zahnartig zwischen die vorbeschriebenen Reibringfortsätze und sorgen auf diese Weise für die drehfeste Verbindung zwischen Reibring und Felge und damit die erforderliche Bremsmomentübertragung.

Aufgrund der Tatsache, daß der Reibring in der Regel mit der Felgenschüssel verbunden ist, finden sich auch die Radialstege eben an dieser Felgenschüssel und sind an diese angeformt. Auf diese Weise wird der Reibring gleichsam von dem Felgenbett übergriffen. Hierdurch umgibt die Felge bzw. das Felgenbett in Verbindung mit der Felgenschüssel den Reibring und übt praktisch bezogen auf den Reibring eine Schutzfunktion aus.

Um eine gleichmäßige Bremsmomentübertragung zu gewährleisten, sind die Radialstege vorzugsweise äquidistant über den Innendurchmesser und /oder Außendurchmesser des Reibringes verteilt angeordnet. Damit die Herstellung der Felge und der rückwärtigen Anschläge an den Axialauslegern maschinell und automatisch folgen kann, sieht die Erfindung vor, daß die rückwärtigen Anschläge als ausgestanzte und hochgebogene Laschen ausgeführt sind. Die Axialausleger bilden mit diesen Laschen gleichsam Durchstellungen an der Felgenschüssel.

Im folgenden wird die Erfindung anhand einer lediglich ein Ausführungsbeispiel darstellenden Zeichnung näher erläutert; es zeigen:
Figur 1 ein erfindungsgemäßes Bremsscheiben-/Felgenaggregat in teilweiser perspektivischer Ansicht,
Figur 2 den Gegenstand nach Figur 1 im Querschnitt,
Figur 3 einen Ausschnitt aus Figur 2 in Aufsicht aus Richtung X und
Figur 4 den Gegenstand nach Figur 1 in Frontansicht aus Richtung Y betrachtet.

In den Figuren ist ein Bremsscheiben-/Felgenaggregat für Räder von Kraftfahrzeugen dargestellt. Dieses besteht in seinem grundsätzlichen Aufbau aus einer Felge 1 mit Felgenschüssel bzw. Felgenfuß 2 sowie Felgenbett 3a, Felgenschulter 3b und schließlich Felgenhorn 3c. Vorliegend handelt es sich um eine Stahlfelge, welche aus kaltverformbarem Stahlband hergestellt ist. Selbstverständlich ist an dieser Stelle auch eine Leichtmetallfelge denkbar. Zu dem beschriebenen Bremsscheiben-/Felgenaggregat gehört darüber hinaus noch ein Reibring 4.

Die Befestigung des Bremsscheiben-/Felgenaggregates erfolgt in konventioneller Weise an einer nicht dargestellten Radnabe des Kraftfahrzeuges. Zu diesem Zweck sind ein Durchbruch 5 für den Durchgang einer Radachse und Schraubenlöcher 6 zur Befestigung der Felge 1 an der Radnabe des Fahrzeuges vorgesehen. Ebenfalls nicht dargestellt ist eine Bremszange, welche den Reibring 4 am Außendurchmesser übergreift. Grundsätzlich ist auch eine Ausgestaltung möglich, bei welcher die Bremszange vom Innendurchmesser des Reibringes her Bremskräfte auf diesen überträgt.

Erfindungsgemäß ist der Reibring 4 unmittelbar an die Felge 1 anschließbar, das heißt, es wird bewußt auf Zwischenstücke, einen Haltetopf oder dergleichen verzichtet. Dies gelingt im Detail so, daß der Reibring 4 mit der Felge 1 lösbar verbunden ist. Die Verbindung des Reibringes 4 mit der Felge 1 erfolgt dabei im Bereich der Felgenschüssel bzw. des Felgenfußes 2. Zu diesem Zweck weist die Felge 1 vorliegend an den Innendurchmesser des Reibringes 4 angepaßte Radialstege 7 mit Axialauslegern 8 auf, welche den hierauf gelagerten Reibring 4 aufnehmen. Nach dem Ausführungsbeispiel sind die Radialstege 7 mit den Axialauslegern 8 einstückig mit der Felge 1 verbunden und werden in einem Zug bei deren Herstellungsvorgang mitgeformt.

Im Rahmen der Erfindung liegt es darüber hinaus, diese Radialstege 7 inklusive Axialauslegern 8 an den Außendurchmesser des Reibringes 4 anzupassen, wenn eine Anbindung des Reibringes 4 über diesen Außendurchmesser gewünscht ist. Die Radialstege 7 sind ebenso wie die zugehörigen Axialausleger 8 äquidistant über den Innendurchmesser des Reibringes 4 verteilt angeordnet, damit über den Reibring 4 auf die Felge 1 übertragene Bremsmomente gleichmäßig an das Rad weitergegeben werden.

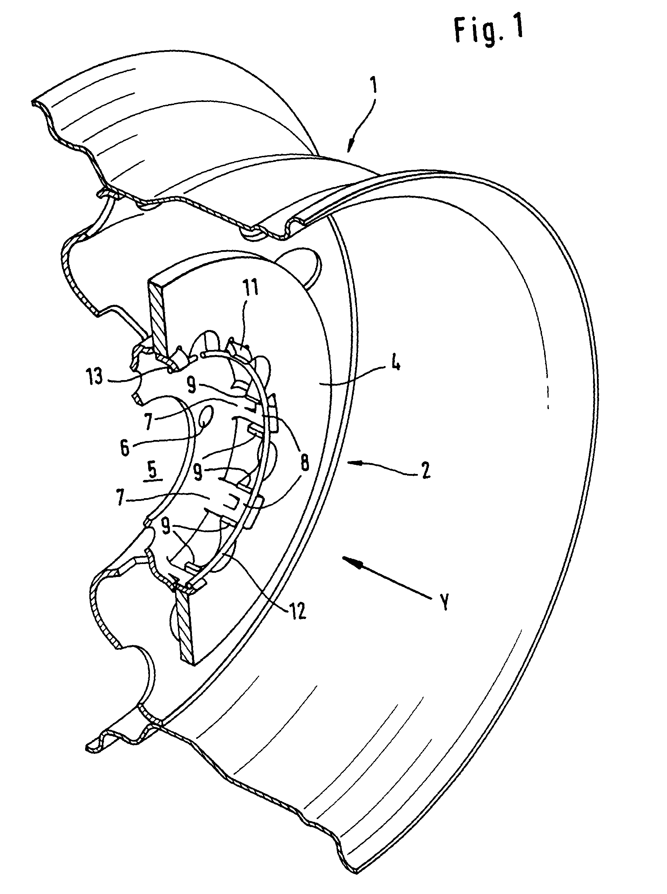

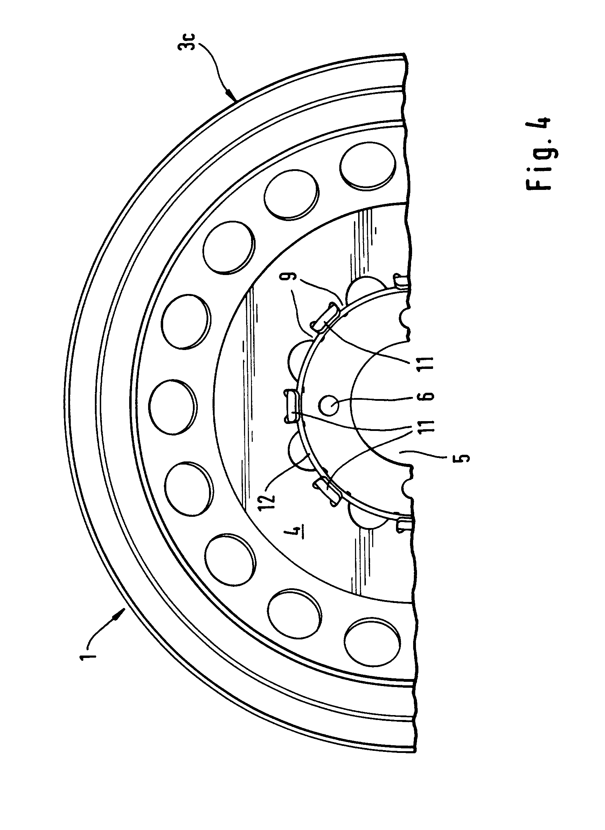

Der Reibring 4 ist sowohl in Axial- als auch Radialrichtung schwimmend an der Felge 1 gelagert. Dies wird im Rahmen der Erfindung detailliert wie folgt gelöst. Zunächst einmal werden die Axialausleger 8 in Frontansicht der Felge 1 jeweils beidseitig von Reibringfortsätzen 9 zur drehfesten Verbindung des Reibringes 4 mit der Felge 1 übergriffen. Dies läßt sich insbesondere anhand der Figuren 1 und 4 erkennen. Anders ausgedrückt, greifen die Axialausleger 8 zahnartig zwischen die vorerwähnten Reibringfortsätze 9, so daß auf diese Weise ein drehfester Anschluß des Reibringes 4 an die Felge 1 gelingt. Diese Anbindung läßt (thermische) Ausdehnungen des Reibringes 4 gegenüber der Felge 1 zu, ohne daß die drehfeste Verbindung in irgendeiner Weise beeinflußt wird. Folglich ist die beschriebene schwimmende Lagerung in Radialrichtung gewährleistet.

Um auch in Axialrichtung eine solche Lagerung darstellen zu können, ist der Reibring 4 axial auf die jeweiligen Axialausleger 8 aufschiebbar, und zwar bis zu einem vom Axialausleger 8 vorkragenden rückwärtigen Anschlag 10. Zusätzlich findet sich an jedem Axialausleger 8 auch ein frontseitiger Anschlag 11, wobei der Reibring 4 auf dem Axialausleger 8 jeweils zwischen diesem rückwärtigen Anschlag 10 und dem frontseitigen Anschlag 11 axial eingeklemmt ist. Die frontseitigen Anschläge 11 sind jeweils an einen gemeinsamen Sicherungsring 12 angeschlossen, welcher in eine von den Axialauslegern 8 gebildete Ringnut 13 eingreift.

Dieser Sicherungsring 12 ist federnd gestaltet, so daß der Reibring 4 in Axialrichtung zwar zwischen den beiden Anschlägen 10, 11 sicher eingeklemmt ist, dennoch Axialbewegungen des Reibringes 4 gegenüber der Felge 1 zugelassen werden. Dies ist von besonderer Bedeutung, wenn dieser Reibring 4 beispielsweise einen Seitenschlag aufweist. Jedenfalls wird hierdurch auch in Axialrichtung eine schwimmende Lagerung des Reibringes 4 an der Felge 1 zur Verfügung gestellt.

Nach dem Ausführungsbeispiel ist jeder Radialsteg 7 mit Axialausleger 8 jeweils mit einem rückwärtigen Anschlag 10 und einem frontseitigen Anschlag 11 ausgerüstet. Selbstverständlich kann hier auch so vorgegangen werden, daß beispielsweise nur jeder zweite Axialausleger 8 derartige Anschläge 10,11 besitzt. Der Sicherungsring 12 kann zur Raddemontage aus der Ringnut 13 problemlos entfernt werden, beispielsweise mit einer geeignet ausgestalteten Klammer oder mit Hilfe eines Abziehers. Dies gilt natürlich nur so lange, wie eine derartige Entfernung überhaupt erforderlich ist. Gleiches gilt natürlich für den Fall, daß der Reibring 4 verschleißbedingt ausgetauscht werden muß.

Bei den rückwärtigen Anschlägen 10 handelt es sich um ausgestanzte und hochgebogene Laschen 10 in Form einer sogenannten Durchstellung an der Felgenschüssel 2. Nach dem Ausführungsbeispiel ist die Lasche 10 um etwa 30 ° gegenüber einer Horizontalen hochgebogen. Dies wird im Rahmen der Felgenherstellung automatisch eingestellt.

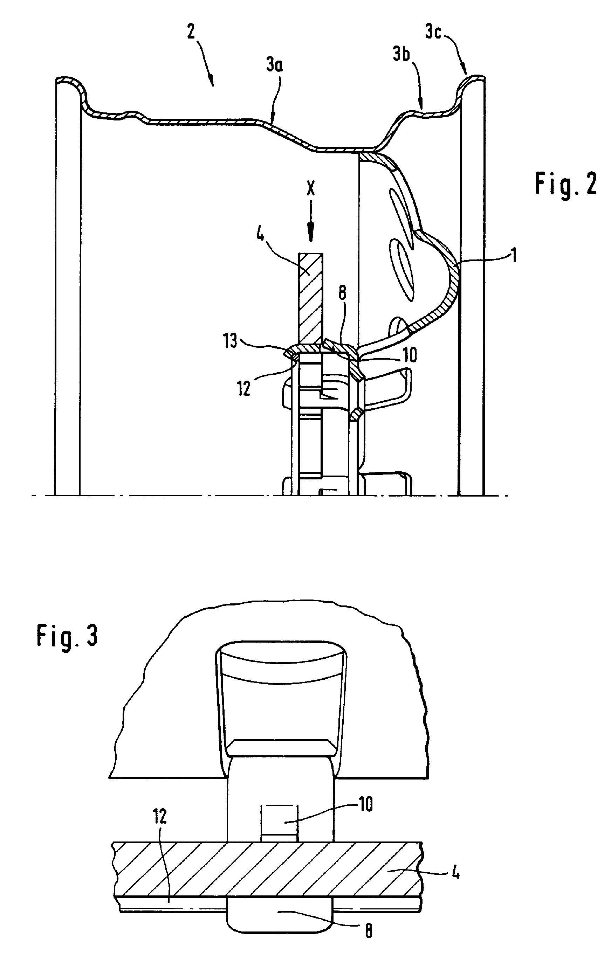

Der Reibring 4 wird gleichsam von dem Felgenbett 3a (vgl. Fig. 2) umgeben, so daß genügend Einbauraum für eine nicht dargestellte Bremszange zur Verfügung steht. Auch thermische Belastungen können auf diese Weise gering gehalten werden, weil genügend Luftvolumen zur Verfügung steht, um über Konvektion für einen entsprechenden Wärmeabtransport sorgen zu können. Dadurch, daß das beschriebene Bremsscheiben/Felgenaggregat bzw. die Felge 1 direkt über Bohrungen 5 an der Radnabe befestigt wird, ist mit einem geringeren Setzen zugehöriger Radschrauben im Betrieb im Vergleich zum Stand der Technik zu rechnen. Denn diese Radschrauben müssen nun nicht noch zusätzlich den Reibring sichern (vgl. DE 34 46 437 C2). Auch wird in der Regel ein geringeres Lösemoment für die Radschrauben beobachtet.

Außerdem ist der Reibring 4 einwandfrei ausgerichtet, weil er gleichsam durch die Radialstege 7 in Verbindung mit den Axialauslegern 8 zentriert wird. Hierin sind die wesentlichen Vorteile zu sehen.

## Patentansprüche

1. Bremsscheiben-/Felgenaggregat für Räder von insbesondere Kraftfahrzeugen, mit einer Felge (1), und mit zumindest einem Reibring (4), **dadurch gekennzeichnet,** daß der Reibring (4) unmittelbar an die Felge (1) anschließbar ist.

2. Bremsscheiben-/Felgenaggregat nach Anspruch 1, **dadurch gekennzeichnet,** da der Reibring (4) lösbar mit der Felge (1) verbunden ist.

3. Bremsscheiben-/Felgenaggregat nach Anspruch 1 oder 2, **dadurch gekennzeichnet**, daß der Reibring (4) mit der Felge (1) im Bereich einer Felgenschüssel (2) verbunden ist.

4. Bremsscheiben-/Felgenaggregat nach einem der Ansprüche 1 bis 3, **dadurch gekennzeichnet**, daß der Reibring (4) in Axial- und/oder Radialrichtung schwimmend an der Felge (1) gelagert ist.

5. Bremsscheiben-/Felgenaggregat nach einem der Ansprüche 1 bis 4, **dadurch gekennzeichnet,** daß die Felge (1) an den Innen- und /oder Außendurchmesser des Reibringes (4) angepaßte Radialstege (7) in Umfangsrichtung aufweist, welche mit Axialauslegern (8) den hierauf gelagerten Reibring (4) aufnehmen.

6. Bremsscheiben-/Felgenaggregat nach Anspruch 5, **dadurch gekennzeichnet,** daß die Axialausleger (8) in Frontansicht der Felge (1) jeweils beidseitig von Reibringfortsätzen (9) zur drehfesten Verbindung des Reibringes (4) mit der Felge (1) übergriffen werden.

7. Bremsscheiben-/Felgenaggregat nach Anspruch 5 oder 6, **dadurch gekennzeichnet,** daß der Reibring (4) axial auf die jeweiligen Axialausleger (8) aufschiebbar ist, und zwar bis zu einem vom Axialausleger (8) vorkragenden rückwärtigen Anschlag (10).

8. Bremsscheiben-/Felgenaggregat nach einem der Ansprüche 5 bis 7, **dadurch gekennzeichnet**, daß der Reibring (4) auf den Axialauslegern (8) jeweils zwischen dem rückwärtigen Anschlag (10) und einem frontseitigen Anschlag (11) eingeklemmt ist.

9. Bremsscheiben-/Felgenaggregat nach Anspruch 8, **dadurch gekennzeichnet**, daß die frontseitigen Anschläge (11) an einen Sicherungsring (12) angeschlossen sind, welcher in eine von den Axialauslegern (8) gebildete Ringnut (13) eingreift.

10. Bremsscheiben-/Felgenaggregat nach einem der Ansprüche 7 bis 9, **dadurch gekennzeichnet**, daß die rückwärtigen Anschläge (10) als ausgestanzte und hochgebogene Laschen (10) ausgeführt sind.

11. Bremsscheiben-/Felgenagregat nach einem der Ansprüche 5 bis 10, **dadurch gekennzeichnet**, daß die Radialstege (7) an die Felgenschüssel (2) angeformt sind und der Reibring (4) von einem Felgenbett (3a) übergriffen wird.

12. Bremsscheiben-/Felgenaggregat nach einem der Ansprüche 5 bis 11, **dadurch gekennzeichnet**, daß die Radialstege (7) äquidistant verteilt über den Innendurchmesser und/ oder den Außendurchmesser des Reibringes (4) angeordnet sind.
